# EUROPEAN PATENT SPECIFICATION

(11) **EP 2 349 671 B1**
(45) Date of publication and mention of the grant of the patent: **04.12.2019**
(21) Application number: 09766925.3
(22) Date of filing: 10.06.2009
(51) Int. Cl.: B29C 45/14, B29C 45/56, B65D 35/12, B65D 6/00, B29C 45/04

(54) **A METHOD AND AN APPARATUS FOR INJECTION MOULDING TO MANUFACTURE A PACKAGING CONTAINER**
VERFAHREN UND VORRICHTUNG ZUM SPITZGIESSEN ZUR HERSTELLUNG EINES VERPACKUNGSBEHÄLTERS
PROCÉDÉ ET APPAREIL DE MOULAGE PAR INJECTION POUR LA FABRICATION D UN RÉCIPIENT D EMBALLAGE

(30) Priority: 19.06.2008 SE 0801433
(43) Date of publication of application: 03.08.2011
(73) Proprietor: Tetra Laval Holdings & Finance S.A., 1009 Pully (CH)
(72) Inventor: MÅNSSON, Patrik, S-245 41 Staffanstorp (SE); BERG, Håkan, S-273 35 Tomelilla (SE); STILLERUD, Lennart, S-224 71 Lund (SE); ANDERSSON, Pär, S-227 38 Lund (SE)
(74) Representative: Tetra Pak - Patent Attorneys SE
(86) International application number: PCT/SE2009/000290
(87) International publication number: WO 2009/154535

(56) References cited:
- EP-A1- 1 925 559
- EP-A2- 1 616 800
- WO-A1-2008/004932
- WO-A1-2008/004932
- WO-A1-2008/062224
- DE-A1- 19 623 301
- US-A- 3 260 411
- US-A- 3 356 263
- US-A- 3 356 263
- US-A- 3 356 263
- US-A- 3 778 321
- US-A- 4 021 524
- US-A- 4 496 513

## Description

### Technical field

The present invention relates to a method for the manufacture of a packaging container.

### Background art

Within the food industry, it is common practice to pack liquid and partly liquid food products in packaging containers manufactured from a packaging laminate comprising a core layer of paper or paperboard and one or more barrier layers of, for example, plastic or aluminium foil (Alifoil).

An increasingly common packaging type is manufactured in a packing and filling machine in that flat-laid tube-shaped packaging blanks of the above-described packaging laminate are raised and sealed at their one end in that a top of thermoplastic is injection moulded direct on the end portion. Another alternative is that sheets of packaging laminate are formed into tube forms which are then sealed in the above-outlined manner. The sheets of packaging laminate may be cut from a magazine reel of packaging laminate.

The sealing takes place in that the packaging blanks are passed onto a mandrel, with the one end of the package abutting against an inner moulding tool, hereinafter referred to as the inner tool. Thereafter, an outer moulding tool, hereinafter referred to as outer tool, is disposed outside the inner tool and thermoplastic is injected into the cavity which is formed between the outer and inner tools. When the requisite quantity of thermoplastic has been injected into the cavity, the injection process is terminated and needle valves close the injection ducts. At this stage, the cavity is not entirely closed and consequently the outer and inner tools are urged against one another, the thermoplastic fills out the entire cavity and comes into abutment against the end portion of the sleeve, and thus forms the shoulder portion of the packaging container.

The above-outlined method is described in the Applicant's Patent Application WO2008/004932 and, even though alternative methods for realising the mutual movement of the moulding tools are possible, this will not be discussed further here.

Other prior art solutions are described in EP1925559 A1 and US3356263 A.

EP1925559A1 discloses a container made of a tube of laminate material with a top section made of plastic. The cap and neck portion of the container is prefabricated and joined to the tube of laminate material via a shoulder section which is injection moulded.

US3356263A discloses a container made of a collapsible tube of either metal, plastic or a plastic laminate which has a prefabricated plastic top and shoulder section. The prefabricated plastic top and shoulder section is joined to the tube by means of injection moulding.

In one method according to the above-mentioned application, the outer tool moreover includes a holder for a screw cap which is used for closing and opening in the finished packaging container, and the inner tool includes a projection which entails that the cavity extends up beneath the screw cap. On injection compression, which the above method may be entitled, thermoplastic is forced up beneath the screw cap and, by cooperation with the inner thread of the screw cap, the neck of the container is thus formed, with a neck opening, in one piece with the shoulder. In this injection compression, a fusion of the thermoplastic material is to take place at the connection between shoulder and packaging blank, and a wetting of the plastic material at the connection between screw cap and neck, in order to ensure a leak-proof container with a screw-off cap. In order to realise this higher level of joining, heating devices may be provided at the joint between the shoulder portion and the upper end of the packaging blank.

### Brief summary of the invention

The present invention has for its object to realise a technically simpler method. The method according to the present invention affords certain additional possibilities for the packaging container which has been formed in accordance therewith. This is realised by means of a method, in a packing and filling machine, of manufacturing a packaging container from a packaging laminate sleeve, with at least one inner layer of thermoplastic, the packaging container including, in addition to the packaging laminate sleeve, a shoulder portion connected to the packaging laminate sleeve and a neck portion, with associated pouring aperture, connected to the shoulder portion. The method comprises the steps of:
- disposing the packaging laminate sleeve in association with an inner moulding tool;
- disposing an outer moulding tool outside the inner moulding tool for forming a cavity between the moulding tools;
- injecting at least one melt of a first material in the cavity;
and is characterised by the steps of:
- disposing the neck portion of the packaging container between said inner and outer moulding tools, in contact with the cavity, the melt filling out the cavity and fusing together with the neck and a portion of the inner layer of thermoplastic located at the end of the packaging laminate sleeve;
- opening the moulding tools and displacing the packaging container further for additional processing.

According to one or more embodiments of the present invention, the cavity which is formed prior to injection of the melt has a volume which exceeds the volume of that packaging portion which is to be manufactured, and further comprises the step of, after injection of the melt, compressing together the moulding tools until the melt fills out the cavity and fuses together with the neck and a portion of the inner layer of thermoplastic located at the end of the packaging laminate sleeve.

It should be observed that the above method steps are not listed in the sequence in which they are suitably put into effect, for example the neck of the packaging container should self-evidently be disposed in the moulding tools before they are brought together. The method according to the present invention makes for simple manufacture of packaging containers which are suitable for aseptic applications. Given that substantially the same preconditions apply, for example as regards temperature of the melt, both on the fusion between neck and shoulder and between shoulder and the packaging laminate sleeve, the method will be relatively simple to govern and a reliable seal at the relevant joint portions will be ensured. The displacement of the moulding tools in relation to one another after the melt has been injected into the cavity facilitates a rapid injection of molten material and a superior distribution thereof. The more rapid injection will become possible because of the fact that the pressure drop can be made much smaller. On reducing the method according to the present invention into practice, the moulding tools need not come into contact with one another, since the outer moulding tool can seal against a part of the circumference of the neck portion, at the connection to the shoulder portion. This implies that each respective moulding tool will only come into contact with the packaging container material, which in turn implies that wear on the tool is reduced compared with methods where the moulding tools come into contact with one another. An extended service life for the moulding tools is to be expected. The method according to the present invention also makes it possible for the neck portion to be manufactured in a separate injection moulding process, which may be discrete and separate in time and space from the earlier process.

According to one or more embodiments, the neck portion includes a membrane which covers the pouring aperture, formed in one part with the neck portion. The use of a membrane which covers the pouring aperture enjoys several advantages. By way of example, mention might be made of the fact that the use of a membrane makes it simpler to create a packaging container which is sufficiently leak-proof for it to be possible to attain aseptic conditions in the package. Also when this possibility is not utilized, the membrane constitutes a tamper control, with the aid of which it is simple to ensure that the packaging container has not been opened and its contents exposed. The membrane is injection moulded in one part with the neck portion.

The neck portion may further be disposed in a sealing arrangement when it is employed in the method according to the invention. Having a sealing device, for example a screw cap, disposed on the neck enjoys several advantages in exercising the method according to the present invention. For example, threads which occur on the outside of the neck are protected on handling of the neck portion. The sealing device also protects the membrane which covers the pouring aperture. As another example, the forming of the outer moulding tool is simplified, since this may now be designed to grasp about a sealing device instead of about a thread. The outside of the sealing device is in general relatively smooth compared with the outside of the neck portion proper which may after all be provided with a thread. This renders the tool less expensive and facilitates the possibility of having a single outer moulding tool, which, during the reduction of the method into practice is only moved in a single direction, for example in the longitudinal direction of the future container. The foregoing also results in the manufacturing process being simplified, since a thread, if any, must in general be grasped with care and at a certain position in order to protect the threads, while a neck portion protected by an opening device may be handled with less caution and in general has a uniform circumference.

It is to be preferred that the shoulder portion manufactured from thermoplastic extends past an upper edge of the packaging laminate sleeve, on the outside of the sleeve, so that the upper end of the sleeve is enclosed on three sides by the shoulder portion. This sandwich construction realises a material bead along the upper circumference of the packaging laminate sleeve, which improves the strength of the connection between sleeve and shoulder. The end portion of the packaging laminate, which is to be considered as the most sensitive portion for mechanical damage and moisture, is also protected in a reliable manner. In this context, it is advantageous if the outside of the packaging laminate sleeve is coated with a thermoplastic layer as well, in which event this also fuses together with the shoulder portion, with increased resistance to moisture and mechanical strength as a result.

In one or more embodiments, the inner moulding tool has a projection for positional adjustment of the neck portion, which makes it possible, in a simple manner, to dispose the neck portion, and where applicable the neck portion disposed in the sealing device, over the inner moulding tool, which in turn simplifies the manufacturing method.

The present invention also relates to a neck portion adapted for use in the method according to the present invention. The neck portion comprises an upwardly extending, substantially cylindrical opening portion defining a pouring aperture, and a flange which is disposed at the lower end and extends radially outwards, which is a previously known design for neck portions which are retrofitted on packaging containers of, for example, packaging laminate. The neck portion according to the present invention is characterised in that the flange tapers radially outwards, which results in a favourable outcome in the above method. The flange of the neck portion according to the present invention extends at least partly radially outwards, according to a plurality of embodiments, it extends in the axial direction, for forming a skirt form which deviates to differing degrees in relation to a horizontal plane. The angle in relation to the horizontal plane will affect the distribution of forces in the pressing step; the greater the angle of deviation in relation to a horizontal plane the smaller will be the force component in that direction which is described by a normal to the surface of the flange.

In one or more embodiments, the contact surface of the flange against the injection moulded plastic may be roughened, or otherwise treated for increasing the exposed surface, which promotes the fusion operation. For the same reason, the flange is suitably terminated in a circumferential tip, which tends to rapidly fuse together with the injected plastic.

The neck portion may be provided with a tear-off membrane formed in the same part as the neck portion, and covering the pouring aperture, which affords the same advantages as those discussed above.

Other preferred embodiments are defined in the appended subclaims.

An apparatus for reducing the method into practice is reminiscent of the apparatus which is described in WO2008/004939, and is characterised in that the moulding tools, after compression, form a cavity which at one end is defined by an upper end of the packaging laminate sleeve and, at the other end, by the lower end of the neck portion.

### Brief description of the accompanying Drawings

The present invention will now be described in greater detail hereinbelow, with reference to the accompanying Drawings. In the accompanying Drawings:
Fig. 1 is an overview of a manufacturing unit for carrying into effect one embodiment of the method according to the present invention;
Fig. 2 is a partial sectional view of one step in an embodiment of the manufacturing method according to the present invention;
Fig. 3 is a partial sectional view of a neck portion according to one preferred embodiment of the present invention; and
Fig. 4 is a partial sectional view of a packaging container manufactured by means of the method illustrated in Fig. 1.

### Description of preferred embodiments

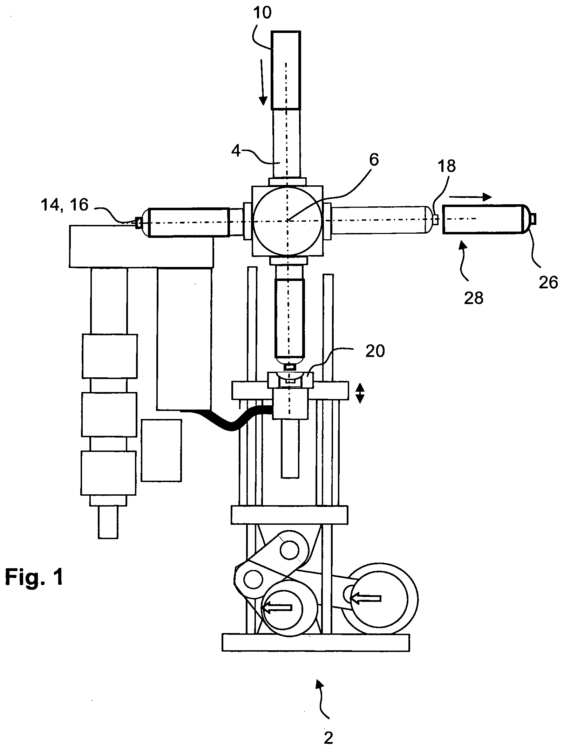

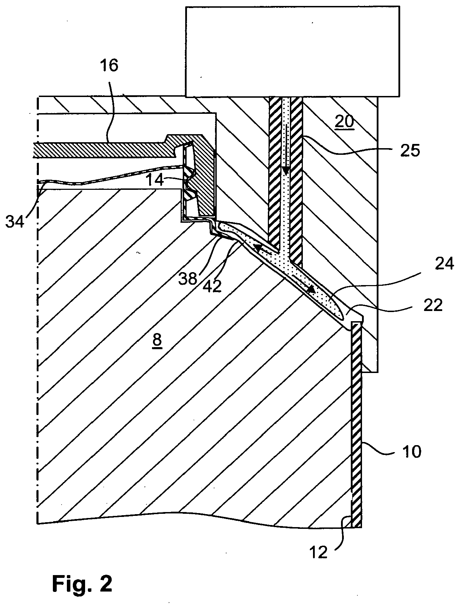

One embodiment of the method according to the present invention will be described with reference to Figs. 1 and 2. Fig. 1 shows a manufacturing unit 2 which may be employed in reducing the method according to the present invention into practice. The manufacturing unit 2 comprises four mandrels 4, each one of which being involved in a method step. At an inner end, the mandrels 4 are directly or indirectly secured to a rotary shaft 6. The other end of each mandrel 4 consists of an inner moulding tool 8, or inner tool, and the mandrels 4 move indexed between each method step, i.e. are indexed to different processing stations which constitute steps in the method.

In a first step, a packaging laminate sleeve 10 is passed over a mandrel, so that the inner moulding tool projects out from the sleeve. The packaging laminate sleeve 10 is manufactured from a packaging laminate with a core layer of paper or paperboard and with a surface coating of thermoplastic on at least one of its two outer side surfaces. The surface coating consists in general of a laminated polyethylene film (PE film), but other materials are also possible, e.g. other barrier materials such as aluminium foil (Alifoil). The barrier materials prevent the transport of moisture, gas (for example oxygen) and radiation (for example UV radiation) from penetrating into the finished package and affecting its contents. The packaging laminate has subsequently been formed into sheets, and each sheet has been bent or folded and joined together for forming a sleeve 10. The sleeve formed in this manner has a polymer layer 12 as outermost layer towards the inside of the packaging container. The sleeve is held in position on the mandrel 4 by the fit between sleeve 10 and mandrel 4.

The mandrel 4 is then indexed further to the next step in which a neck portion 14 with associated sealing device 16 is disposed on a projection 18 at the radially outer end of the inner moulding tool. According to the currently preferred embodiment, these two steps take place in the reverse sequence.

The mandrel 4 is then indexed further to the next step in which the major part of the manufacturing process is carried out. In this third step, an outer tool 20 has been aligned with the inner tool 8, and the outer tool 20 is passed down over the inner tool 8 so that a cavity 22 is formed between the tools. It should here be observed that the outer tool realises sealing by being abutted against the neck portion 14. The sealing device 16 thus fulfils no function in the sealing, and since it is held in position at the neck portion 14, the recess in the outer tool 20 need not be adapted to a specific sealing device 16, but is adapted to accommodate a plurality of different types of sealing devices. Thereafter, a needle valve (not shown) is opened and a measured quantity of molten thermoplastic material 24 is injected into the cavity through ducts 25 in the outer tool 20 and spreads in the cavity 22. This part step is shown in greater detail in Fig. 2. It should be observed that this figure is not intended to reflect the actual size relationships and dimensions, but is merely provided for purposes of illustration. The needle valve is then closed and the outer tool 20 is urged against the inner tool 8 and molten material 24 spreads further for the formation of the shoulder portion 26 of the packaging container. The molten material 24 fuses together with the thermoplastic material in the neck portion 14 and with the thermoplastic material which is disposed on the inside 12 of the packaging sleeve 10. There is a plurality of alternatives to using needle valves, which need not be discussed further here. One example however is to totally dispense with the use of a valve, and instead cool the nozzle of the duct which leads through the outer tool 20 down into the cavity. As a result, a hardened plug of plastic material can be created, this plug being positioned sufficiently hard to permit pressing, and sufficiently loosely to permit injection of a new plastic charge when the next shoulder portion is to be injection moulded.

The cavity 22 formed between the inner tool 8 and the outer tool 20 may go down a short distance from the upper edge of the sleeve 10, both on the inside and the outside of the sleeve 10. Thus, in the area of the upper edge of the sleeve 10 the cavity leaves the upper edge area of the sleeve 10 free, including short distances down on both the inside and the outside. The injected material 24 will enclose the upper end of the sleeve 10 on three sides. The form of the inner tool 8 and the outer tool 20, respectively, dictates how far down the cavity 22 goes on the inside and the outside of the sleeve 10. In the shown embodiment the cavity 22 extends further downwards on the inside of the sleeve 10 than on the outside of the sleeve 10. In other embodiments the cavity goes further down on the outside than on the inside, while in still further embodiments the cavity goes down the same distance on both the inside and the outside. Thus, in some embodiments there are more material on either the inside or the outside of the upper part of the sleeve 10 than on the other side of the sleeve 10, while in other embodiments it is the same amount of material on both sides of the upper part of the sleeve 10. The molten material 24 injected in the cavity 22 fuses together with thermoplastic material both on the inside and the outside of the sleeve 10.

In general, a plurality of injection ducts are provided in order to obtain a uniform distribution of material, and a rapid injection. In addition, in order for the molten thermoplastic material 24 to spread uniformly in the cavity 22, air bleeder valves and air bleeder cavities (not shown) are provided. Without air bleeder ducts, there is a risk that air pockets are formed, in which air pockets an increased pressure may prevent the spread of the melt, with disadvantageous results as a consequence. Instead of air bleeder ducts, of as a supplement to them, air nipples, recesses, may be provided in the inner and/or outer tool.

At the next indexing position, the formed packaging container 28 is removed from the mandrel and conveyed further for additional processing, such as for example sterilization, filling and sealing.

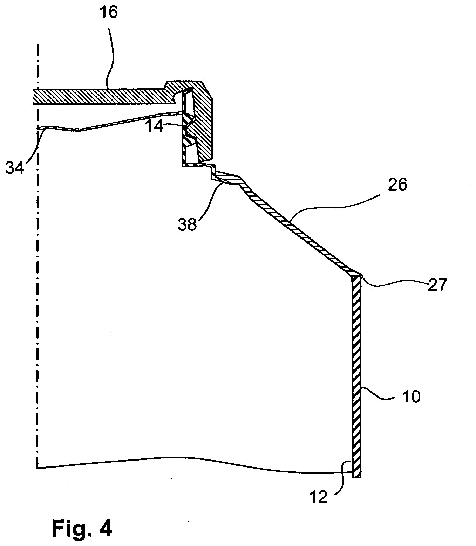

Fig. 4 shows a partial view of a finished packaging container. The parts of the packaging container, the neck portion, the shoulder portion and the sleeve portion are marked. In the injection moulded shoulder portion, the upper end edge of the packaging laminate sleeve (at 27 in Fig. 4) extends beyond, in such a manner that three sides of this end are surrounded by injection moulded thermoplastic. On the outside of the packaging container, the shoulder portion must not extend further than 10 micrometres past the end edge for a tangible effect on mechanical strength to occur, even if longer distances are common and preferred. When the shoulder portion extends past the end edge, a material bead is formed which reinforces the construction, above all, as described below, if a thermoplastic material is disposed on the outside of the packaging container. In that case when the packaging laminate consists of a core of paper which, on either side, is surrounded by thermoplastic in such a manner that a thermoplastic laminate is also disposed on the outside of the packaging container, the shoulder portion can fuse together with this for additional mechanical strength and protection from moisture. The bead which is formed also functions as a seal of the end edge of the packaging laminate sleeve, and prevents the core of paper exposed there from edge wicking and attracting moisture or delaminating.

The shoulder portion is preferably thin, generally about 0.6 mm, apart from in the sealing positions where it is slightly thicker. Greater thicknesses are in general simpler to manufacture, but a greater thickness leads to a higher consumption of material. So thin thicknesses as 0.2-0.5 mm are assumed. In general, it is more complicated to manufacture thinner shoulder portions, and in addition to this there are also requirements on stability, which also restricts the thickness downwards. A restrictive factor for greater thicknesses is that the cooling time will be longer, which makes it difficult to keep to those cycle times which are required in today's production.

The provision of components on mandrels and moulding tools is preferably automated, even if it may also be partly manual, and will not be described in greater detail in this application. It is considered as falling within the scope of competence of a person skilled in the art to reduce the present invention into practice on the basis of the information described herein. Further, details and mechanisms in the unit according to Fig. 1 are carefully described in previously filed application WO2008/004939, for which reason these have been largely omitted in connection with Fig. 1.

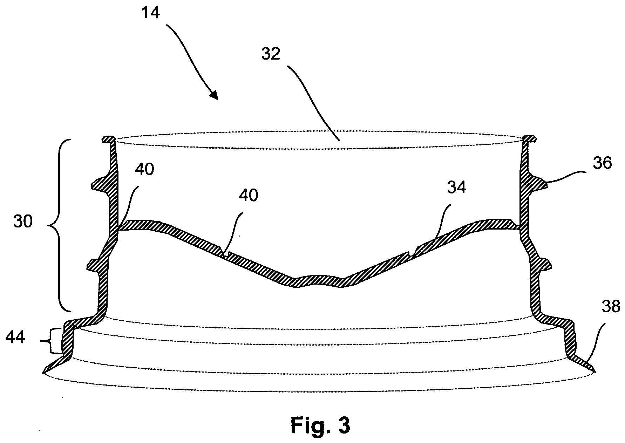

Fig. 3 shows a neck portion 14 according to one embodiment of the present invention. The neck portion 14 is shown in section and broken support lines are drawn for purposes of increasing clarity. The neck portion has a substantially cylindrical, upwardly extending, opening portion 30. The opening portion defines a pouring aperture 32 which may optionally be provided with a membrane 34, formed in one piece with the neck portion 14. On its outside, the opening portion is preferably provided with a thread 36 cooperating with a screw cap 16 intended for the neck portion (not shown in Fig. 3). At its lower end, the neck portion 14 has a circumferential flange 38 extending radially outwards from the opening portion, and whose purpose is to improve the union between the portions. It should be observed that the flange 38 of the neck portion 14 may also have an extent in the axial direction (i.e. in the direction of the axis of rotation symmetry of the neck portion 38), as is the case in Figs. 2-4. The neck portion 14 is characterised in that the flange 38 tapers radially outwards, for optimum fusion with the shoulder portion on use in the method according to the present invention. In the illustrated embodiment, the flange 38 has a substantially planar underside, and a sloping upper side. As shown in Fig. 2, the planar underside abuts against the inner tool 8, while the sloping upper side is covered by molten, injected material 24. In order further to amplify the effect, the inner tool may have a circumferential ridge 42 which forces the molten material 24 over the upper side of the flange 38. On reduction of the method according to the present invention into practice, the underside is thus pressed downwards, while the upper side is covered. One result of this is that the radial outer edge of the flange 38 does not run the risk of extending up through the material in the shoulder portion 26 (see Fig. 4), which would involve the risk of defacing and weakening the packaging container 28. Upwardly projecting material could also result in insufficient sealing, which would be extremely harmful to those products which are to be accommodated in the future packaging container. According to another embodiment, the underside of the flange 38 is not planar, but is configurationally adapted to the inner moulding tool 8. The membrane 34 is preferably provided with at least one weakening line 40 along which it is simply torn off on opening. The weakening line 40 may be formed in different ways. In certain embodiments, the line 40 is simply disposed along the inner circumference of the pouring aperture (the radially outer weakening lines 40 in Fig. 3, which consist of a continuous line), and in other versions, the weakening lines may be of helical configuration, or other configuration. The formation of the weakening lines 40 naturally influences the tearing off of the membrane 34, but will not be discussed further within the scope of the present invention.

Further, a portion 44 of the neck portion 14 may be provided with a circumferential bead which extends radially outwards, see Fig. 3. The portion 44 extends substantially axially and is disposed in association with the flange 38. The circumferential bead 44 improves the contact with the outer tool 20, and thereby the seal during the injection and pressing process.

The neck portion is preferably manufactured from a material with the same properties, in particular melting point, as the material which is employed in the injection moulding. Examples of materials encompass, but are not restricted to: polyethylene (PE), polypropylene (PP), or polyethylene terephthalate (PET) and mixtures thereof. The sealing device may, for example, be manufactured from PE or PP, and variations thereof.

The opening device of the neck portion may, as an alternative to a screw cap, for example consist of a bayonet opening, a flip opening or a one-action opening. This alteration may be put into effect without direct modifications of a manufacturing unit, since the outer tool does not engage with the opening device, but with the neck portion.

The parts included in the finished package are preferably preheated before the method according to the present invention is put into effect. This is to avoid local condensation of gaseous sterilization agent in a subsequent sterilization process. Those parts which need to be preheated are in general only the neck portion and the sleeve portion, since the plastic cast shoulder portion is already at an elevated temperature. Further, the described method could be put into effect without pressing after injection of molten material, even if this process is at present not to be preferred.

## Claims

1. A method, in a packing and filling machine, of manufacturing a packaging container from a packaging laminate sleeve (10) with at least one inner layer of thermoplastic, the packaging container, in addition to the packaging laminate sleeve, including a shoulder portion connected to the packaging laminate sleeve, and a neck portion connected to the shoulder portion, with associated pouring aperture, comprising the steps of:
- disposing the packaging laminate sleeve (10) in association with an inner moulding tool,
- disposing an outer moulding tool outside the inner moulding tool for the formation of a cavity between the moulding tools,
- injecting at least one melt of a first material into the cavity,
**characterised by** the steps of:
- disposing the neck portion of the packaging container between said inner and outer moulding tools, in contact with the cavity, the melt filling out the cavity and fusing together with the neck and a portion of the inner layer of thermoplastic located at the end of the packaging laminate sleeve, wherein the shoulder portion manufactured from thermoplastic extends past an upper edge of the packaging laminate sleeve, on the outside of the sleeve, so that the upper end of the sleeve is enclosed on three sides by the shoulder portion, and
- opening the moulding tools and displacing the packaging container further to additional processing.

2. The method as claimed in Claim 1, wherein the cavity, in the step prior to the injection of the melt, has a volume exceeding the volume of that packaging part which is to be manufactured, and further comprising the step, after injection of the melt, of:
- compressing the moulding tools until the melt fills out the cavity and fuses together with the neck and to a portion of the inner layer of thermoplastic located at the end of the packaging laminate sleeve.

3. The method as claimed in Claim 1 or 2, wherein the neck portion includes a membrane which covers the pouring aperture, formed in one part with the neck portion.

4. The method as claimed in any of Claims 1 to 3, wherein the neck portion is disposed in a sealing device.

5. The method as claimed in Claim 3, wherein the neck portion has an external thread and the sealing device is a screw cap.

6. The method as claimed in any of the preceding Claims, wherein the inner moulding tool has a projection for positional adjustment of the neck portion.

7. The method as claimed in any of the preceding Claims, wherein the shoulder portion created by means of the method displays a material thickness of: 0.2-0.6 mm, more preferably 0.3-0.5 mm.

8. The method as claimed in any of the preceding Claims, wherein the neck portion comprises a circumferential flange disposed at the lower end and extending radially outwards, which flange tapers radially outwards.

9. The method as claimed in Claim 8, wherein the upper surface of the flange is roughened for improved contact with the molten injected material.

10. The method as claimed in Claim 8 or 9, wherein the neck portion, at a region above the flange, has an axially extending region which is provided with an outwardly extending bead for increased contact against the outer moulding tool.

11. The method as claimed in Claim 1, wherein the neck portion is provided with a bayonet opening, a flip-opening or a one-action opening.

12. An apparatus for carrying out the method as claimed in Claim 1, comprising
- means for disposing the packaging laminate sleeve (10) in association with an inner moulding tool (8), such that the shoulder portion manufactured from thermoplastic extends past an upper edge of the packaging laminate sleeve, on the outside of the sleeve, so that the upper end of the sleeve is enclosed on three sides by the shoulder portion,
- an outer moulding tool (20) disposable outside the inner moulding tool (8) for forming a cavity (22) between the moulding tools (8, 20), the cavity (22) having a volume exceeding the volume of the packaging part which is to be injection moulded,
- means for positional adjustment of the neck portion (14) of the packaging container in relation the moulding tools (8, 20),
- means for injecting a melt of a first material into the cavity,
said apparatus further including a compression mechanism for compression of the moulding tools (8, 20), and being **characterised in that** the moulding tools (8, 20), after the compression, form a cavity (22) which at one end is defined by an upper end of the packaging laminate sleeve (10) and at the other end by the lower end of the neck portion (14).

13. The apparatus as claimed in Claim 12, wherein the cavity (22) has such a form that a manufactured shoulder portion (26) of the packaging container extends past an upper edge of the packaging laminate sleeve (10).

14. The apparatus as claimed in Claim 12 or 13, comprising a single inner moulding tool (8) and a single outer moulding tool (20).

15. The apparatus as claimed in any of Claims 12 or 14, wherein the cavity (22), after compression at said second end is defined by a radially outwardly extending circumferential flange (38) in the neck portion (14), the circumferential flange (38) being preferably tapering.

16. A packaging container comprising a packaging laminate sleeve (10) provided with at least an inner layer (12) of thermoplastic, a neck portion (14) with associated pouring aperture (32), and a shoulder portion connected to the packaging laminate sleeve (10) and the neck portion (14), **characterised in that** the shoulder portion is fused together with the neck portion (14) and a portion of the inner layer of thermoplastic located at the end of the packaging laminate sleeve (10), wherein the shoulder portion manufactured from thermoplastic extends past an upper edge of the packaging laminate sleeve, on the outside of the sleeve, so that the upper end of the sleeve is enclosed on three sides by the shoulder portion.

17. Packaging container according to claim 16, wherein the neck portion (14) comprises a substantially cylindrical opening portion (30) defining the pouring aperture (32), said neck portion (14) being disposed in a sealing device (16) and said neck portion (14) further comprising a circumferencial flange (38) disposed at the lower end and extending radially outwards, which flange (38) tapers radially outwards intended for fusion with the shoulder portion of the packaging container, wherein the flange (38) is terminated in a circumferencial tip for promoting rapid fusing together with an injected plastic forming the shoulder portion of the container.

## Patentansprüche

1. Verfahren in einer Verpackungs- und Füllmaschine zum Herstellen eines Verpackungsbehälters aus einer Verpackungslaminathülse (10) mit mindestens einer Innenschicht aus Thermoplast, wobei der Verpackungsbehälter zusätzlich zu der Verpackungslaminathülse einen Schulterabschnitt, der mit der Verpackungslaminathülse verbunden ist, und einen Halsabschnitt, der mit dem Schulterabschnitt verbunden ist, mit zugehöriger Ausgießöffnung, beinhaltet, umfassend die Schritte:
- Anordnen der Verpackungslaminathülse (10) in Verbindung mit einem inneren Formwerkzeug,
- Anordnen eines äußeren Formwerkzeugs außerhalb des inneren Formwerkzeugs zum Ausbilden eines Hohlraums zwischen den Formwerkzeugen,
- Einspritzen von mindestens einer Schmelze eines ersten Materials in den Hohlraum,
**gekennzeichnet durch** folgende Schritte:
- Anordnen des Halsabschnitts des Verpackungsbehälters zwischen dem inneren und äußeren Formwerkzeug in Kontakt mit dem Hohlraum, wobei die Schmelze den Hohlraum ausfüllt und zusammen mit dem Hals und einem Abschnitt der Innenschicht aus Thermoplast verschmilzt, der sich am Ende der Verpackungslaminathülse befindet, wobei sich der Schulterabschnitt, der aus Thermoplast hergestellt ist, über eine obere Kante der Verpackungslaminathülse an der Außenseite der Hülse hinaus erstreckt, sodass das obere Ende der Hülse an drei Seiten von dem Schulterabschnitt umschlossen wird, und
- Öffnen der Formwerkzeuge und Verschieben des Verpackungsbehälters weiter zur zusätzlichen Bearbeitung.

2. Verfahren nach Anspruch 1, wobei der Hohlraum in dem Schritt vor dem Einspritzen der Schmelze ein Volumen aufweist, das das Volumen des herzustellenden Verpackungsteils übersteigt, und ferner umfassend den Schritt, nach dem Einspritzen der Schmelze, von:
- Komprimieren der Formwerkzeuge, bis die Schmelze den Hohlraum ausfüllt und mit dem Hals und einem Abschnitt der Innenschicht aus Thermoplast verschmilzt, der sich am Ende der Verpackungslaminathülse befindet.

3. Verfahren nach Anspruch 1 oder 2, wobei der Halsabschnitt eine Membran aufweist, die die Ausgießöffnung bedeckt, die in einem Teil mit dem Halsabschnitt ausgebildet ist.

4. Verfahren nach einem der Ansprüche 1 bis 3, wobei der Halsabschnitt in einer Dichtungsvorrichtung angeordnet ist.

5. Verfahren nach Anspruch 3, wobei der Halsabschnitt ein Außengewinde aufweist und die Dichtungsvorrichtung eine Schraubkappe ist.

6. Verfahren nach einem der vorangehenden Ansprüche, wobei das innere Formwerkzeug einen Vorsprung zur Positionseinstellung des Halsabschnitts aufweist.

7. Verfahren nach einem der vorangehenden Ansprüche, wobei der Schulterabschnitt, geschaffen mittels des Verfahrens, eine Materialdicke aufweist von: 0,2-0,6 mm, mehr bevorzugt 0,3-0,5 mm.

8. Verfahren nach einem der vorangehenden Ansprüche, wobei der Halsabschnitt einen Umfangsflansch umfasst, der am unteren Ende angeordnet ist und sich radial nach außen erstreckt, wobei sich der Flansch radial nach außen verjüngt.

9. Verfahren nach Anspruch 8, wobei die obere Oberfläche des Flansches für einen verbesserten Kontakt mit dem geschmolzenen eingespritzten Material aufgeraut ist.

10. Verfahren nach Anspruch 8 oder 9, wobei der Halsabschnitt in einem Bereich oberhalb des Flansches einen sich axial erstreckenden Bereich aufweist, der mit einem sich nach außen erstreckenden Wulst für einen verstärkten Kontakt gegen das äußere Formwerkzeug versehen ist.

11. Verfahren nach Anspruch 1, wobei der Halsabschnitt mit einer Bajonettöffnung, einer Klappöffnung oder einer Einwegöffnung versehen ist.

12. Vorrichtung zur Ausführung des Verfahrens nach Anspruch 1, umfassend:
- Mittel zum Anordnen der Verpackungslaminathülse (10) in Verbindung mit einem inneren Formwerkzeug (8), sodass sich der aus Thermoplast hergestellte Schulterabschnitt über einen oberen Rand der Verpackungslaminathülse an der Außenseite der Hülse hinaus erstreckt, sodass das obere Ende der Hülse an drei Seiten von dem Schulterabschnitt umschlossen ist,
- ein äußeres Formwerkzeug (20), das außerhalb des inneren Formwerkzeugs (8) zum Ausbilden eines Hohlraums (22) zwischen den Formwerkzeugen (8, 20) anordenbar ist, wobei der Hohlraum (22) ein Volumen aufweist, welches das Volumen des Verpackungsteils, das spritzgegossen werden soll, überschreitet,
- Mittel zur Positionseinstellung des Halsabschnitts (14) des Verpackungsbehälters in Bezug auf die Formwerkzeuge (8, 20),
- Mittel zum Einspritzen einer Schmelze eines ersten Materials in den Hohlraum,
wobei die Vorrichtung ferner einen Kompressionsmechanismus zum Komprimieren der Formwerkzeuge (8, 20) umfasst und **dadurch gekennzeichnet ist, dass** die Formwerkzeuge (8, 20) nach dem Komprimieren einen Hohlraum (22) ausbilden, der an einem Ende durch ein oberes Ende der Verpackungslaminathülse (10) und am anderen Ende durch das untere Ende des Halsabschnitts (14) definiert ist.

13. Vorrichtung nach Anspruch 12, wobei der Hohlraum (22) eine solche Form aufweist, dass sich ein hergestellter Schulterabschnitt (26) des Verpackungsbehälters über eine obere Kante der Verpackungslaminathülse (10) hinaus erstreckt.

14. Vorrichtung nach Anspruch 12 oder 13, umfassend ein einzelnes inneres Formwerkzeug (8) und ein einzelnes äußeres Formwerkzeug (20).

15. Vorrichtung nach einem der Ansprüche 12 oder 14, wobei der Hohlraum (22) nach dem Komprimieren an dem zweiten Ende durch einen sich radial nach außen erstreckenden Umfangsflansch (38) in dem Halsabschnitt (14) definiert ist, wobei sich der Umfangsflansch (38) vorzugsweise verjüngt.

16. Verpackungsbehälter, umfassend eine Verpackungslaminathülse (10), die mit mindestens einer Innenschicht (12) aus Thermoplast versehen ist, einen Halsabschnitt (14) mit zugehöriger Ausgießöffnung (32) und einen Schulterabschnitt, der mit der Verpackungslaminathülse (10) und dem Halsabschnitt (14) verbunden ist, **dadurch gekennzeichnet, dass** der Schulterabschnitt mit dem Halsabschnitt (14) verschmolzen ist und ein Abschnitt der Innenschicht aus Thermoplast am Ende der Verpackungslaminathülse (10) angeordnet ist, wobei sich der Schulterabschnitt, der aus Thermoplast hergestellt ist, über eine obere Kante der Verpackungslaminathülse hinaus auf der Außenseite der Hülse erstreckt, sodass das obere Ende der Hülse auf drei Seiten von dem Schulterabschnitt umschlossen ist.

17. Verpackungsbehälter nach Anspruch 16, wobei der Halsabschnitt (14) einen im Wesentlichen zylindrischen Öffnungsabschnitt (30) aufweist, der die Ausgießöffnung (32) definiert, wobei der Halsabschnitt (14) in einer Dichtungsvorrichtung (16) angeordnet ist und der Halsabschnitt (14) ferner einen Umfangsflansch (38) umfasst, der an dem unteren Ende angeordnet ist und sich radial nach außen erstreckt, wobei sich der Flansch (38) radial nach außen verjüngt, vorgesehen für eine Fusion mit dem Schulterabschnitt des Verpackungsbehälters, wobei der Flansch (38) in einer Umfangsspitze endet, um ein schnelles Verschmelzen zusammen mit einem eingespritzten Kunststoff zu fördern, der den Schulterabschnitt des Behälters ausbildet.

## Revendications

1. Procédé, dans une machine d'emballage et de remplissage, visant à fabriquer un récipient d'emballage à partir d'un manchon stratifié (10) d'emballage comprenant au moins une couche intérieure de thermoplastique, le récipient d'emballage, en plus du manchon stratifié d'emballage, comprenant une partie d'épaulement reliée au manchon stratifié d'emballage, et une partie de goulot reliée à la partie d'épaulement, dotée d'un orifice verseur associé, comprenant les étapes consistant à:
- disposer le manchon stratifié (10) d'emballage en association avec un outil intérieur de moulage,
- disposer un outil extérieur de moulage à l'extérieur de l'outil intérieur de moulage pour former une cavité entre les outils de moulage,
- injecter au moins une coulée d'un premier matériau dans la cavité,
**caractérisé en ce qu'**il comporte les étapes consistant à:
- disposer la partie de goulot du récipient d'emballage entre lesdits outils intérieur et extérieur de moulage, en contact avec la cavité, la coulée remplissant entièrement la cavité et fusionnant avec le goulot et une partie de la couche intérieure de thermoplastique située à l'extrémité du manchon stratifié d'emballage, la partie de goulot en thermoplastique s'étendant au-delà d'un bord supérieur du manchon stratifié d'emballage, sur l'extérieur du manchon, de sorte que l'extrémité supérieure du manchon soit entourée sur trois côtés par la partie de goulot, et
- ouvrir les outils de moulage et déplacer le récipient d'emballage pour permettre un traitement supplémentaire de celui-ci.

2. Procédé selon la revendication 1, dans lequel la cavité, dans l'étape précédant l'injection de la coulée, présente un volume supérieur au volume de la partie d'emballage à fabriquer, et comprenant en outre l'étape, après injection de la coulée, consistant à:
- comprimer les outils de moulage jusqu'à ce que la coulée remplisse entièrement la cavité et fusionne avec le goulot et une partie de la couche intérieure de thermoplastique située à l'extrémité du manchon stratifié d'emballage.

3. Procédé selon la revendication 1 ou 2, dans lequel la partie de goulot comprend une membrane qui recouvre l'orifice verseur, formée en un seul tenant avec la partie de goulot.

4. Procédé selon l'une quelconque des revendications 1 à 3, dans lequel la partie de goulot est disposée dans un dispositif d'étanchéité.

5. Procédé selon la revendication 3, dans lequel la partie de goulot présente un filetage extérieur et le dispositif d'étanchéité est un bouchon à vis.

6. Procédé selon l'une quelconque des revendications précédentes, dans lequel l'outil intérieur de moulage comporte une saillie pour l'ajustement de position de la partie de goulot.

7. Procédé selon l'une quelconque des revendications précédentes, dans lequel la partie d'épaulement créée au moyen du procédé présente une épaisseur de matériau de: 0,2-0,6 mm, de préférence de 0,3-0,5 mm.

8. Procédé selon l'une quelconque des revendications précédentes, dans lequel la partie de goulot comprend une bride circonférentielle disposée à l'extrémité inférieure et s'étendant radialement vers l'extérieur, laquelle bride s'effile radialement vers l'extérieur.

9. Procédé selon la revendication 8, dans lequel la surface supérieure de la bride est rendue rugueuse pour améliorer le contact avec le matériau en fusion injecté.

10. Procédé selon la revendication 8 ou 9, dans lequel la partie de goulot, dans une zone située au-dessus de la bride, présente une zone s'étendant axialement qui est munie d'un bourrelet s'étendant vers l'extérieur pour un contact accru contre l'outil extérieur de moulage.

11. Procédé selon la revendication 1, dans lequel la partie de goulot est munie d'une ouverture à baïonnette, d'une ouverture articulée ou d'une ouverture à une action.

12. Appareil pour la mise en œuvre du procédé selon la revendication 1, comprenant:
- des moyens pour disposer le manchon stratifié (10) d'emballage en association avec un outil intérieur de moulage (8), de telle sorte que la partie d'épaulement en thermoplastique s'étend au-delà d'un bord supérieur du manchon stratifié d'emballage, à l'extérieur du manchon, de sorte que l'extrémité supérieure du manchon est entourée sur trois côtés par la partie d'épaulement,
- un outil extérieur de moulage (20) pouvant être disposé à l'extérieur de l'outil intérieur de moulage (8) pour former une cavité (22) entre les outils de moulage (8, 20), la cavité (22) présentant un volume supérieur au volume de la partie d'emballage à mouler par injection,
- des moyens pour l'ajustement de position de la partie de goulot (14) du récipient d'emballage par rapport aux outils de moulage (8, 20),
- des moyens pour injecter une coulée d'un premier matériau dans la cavité,
ledit appareil comprenant en outre un mécanisme de compression pour comprimer les outils de moulage (8, 20), et étant **caractérisé en ce que** les outils de moulage (8, 20), après la compression, forment une cavité (22) qui, à une extrémité est définie par une extrémité supérieure du manchon stratifié (10) d'emballage et à l'autre extrémité par l'extrémité inférieure de la partie de goulot (14).

13. Appareil selon la revendication 12, dans lequel la cavité (22) présente une forme telle qu'une partie d'épaulement fabriquée (26) du récipient d'emballage s'étend au-delà d'un bord supérieur du manchon stratifié (10) d'emballage.

14. Appareil selon la revendication 12 ou 13, comprenant un seul outil intérieur de moulage (8) et un seul outil extérieur de moulage (20).

15. Appareil selon l'une quelconque des revendications 12 ou 14, dans lequel la cavité (22), après compression au niveau de ladite seconde extrémité, est définie par une bride circonférentielle (38) s'étendant radialement vers l'extérieur dans la partie de goulot (14), la bride circonférentielle (38) étant de préférence conique.

16. Récipient d'emballage comprenant un manchon stratifié (10) d'emballage muni d'au moins une couche intérieure (12) de thermoplastique, une partie de goulot (14) avec un orifice verseur associé (32), et une partie d'épaulement reliée au manchon stratifié (10) d'emballage et à la partie de goulot (14), **caractérisé en ce que** la partie d'épaulement est fusionnée avec la partie de goulot (14) et avec une partie de la couche intérieure de thermoplastique située à l'extrémité du manchon stratifié (10) d'emballage, la partie d'épaulement en thermoplastique s'étendant au-delà d'un bord supérieur du manchon stratifié d'emballage, sur l'extérieur du manchon, de sorte que l'extrémité supérieure du manchon est entourée sur trois côtés par la partie d'épaulement.

17. Récipient d'emballage selon la revendication 16, dans lequel la partie de goulot (14) comprend une partie d'ouverture sensiblement cylindrique (30) définissant l'orifice verseur (32), ladite partie de goulot (14) étant disposée dans un dispositif d'étanchéité (16) et ladite partie de goulot (14) comprenant en outre une bride circonférentielle (38) disposée à son extrémité inférieure et s'étendant radialement vers l'extérieur, laquelle bride (38) s'effile radialement vers l'extérieur et est destinée à être fusionnée avec la partie d'épaulement du récipient d'emballage, la bride (38) étant terminée par une pointe circonférentielle pour promouvoir une fusion rapide avec un plastique injecté formant la partie d'épaulement du récipient.
